# EUROPEAN PATENT SPECIFICATION

(11) **EP 1 041 116 B1**
(45) Date of publication and mention of the grant of the patent: **19.01.2005**
(21) Application number: 99204605.2
(22) Date of filing: 19.12.1996
(51) Int. Cl.: C08L 63/00, C08L 63/02, C08L 67/02, C08L 71/00, C08L 3/02, C08L 97/02

(54) **Compositions comprising hydroxy-functional polymers**
Zusammensetzungen von hydroxyfunktionellen Polymeren
Compositions comprenant des polymères à fonction hydroxy

(30) Priority: 21.12.1995 US 9022 P
(43) Date of publication of application: 04.10.2000
(62) Divisional of application: 96944456.1
(73) Proprietor: BIOTECHNOLOGY RESEARCH AND DEVELOPMENT CORPORATION, Peoria, IL 61604 (US)
(72) Inventor: Mang, Michael N., Midland, MI 48640 (US); White, Jerry E., Lake Jackson, TX 77566 (US)
(74) Representative: Raynor, John

(56) References cited:
- EP-A- 0 513 679
- GB-A- 1 014 884
- US-A- 3 313 640
- US-A- 4 179 540
- DATABASE WPI Section Ch, Week 7625 Derwent Publications Ltd., London, GB; Class A85, AN 76-46762X XP002030040 & JP 51 050708 A (SONY CORP), 4 May 1976 (1976-05-04)
- DATABASE WPI Section Ch, Week 8344 Derwent Publications Ltd., London, GB; Class A25, AN 83-804399 XP002030041 & JP 58 160368 A (SUMITOMO CHEM CO LTD), 22 September 1983 (1983-09-22)

## Description

This invention relates to compositions comprising hydroxy-functional polymers and to articles prepared therefrom.

Polysaccharides are inexpensive and have good mechanical properties, but cannot be easily processed as thermoplastics. To take advantage of their low cost, attempts have been made to blend them with synthetic polymers, such as polyolefins, to produce more useful materials. However, the resulting materials often suffer from several problems. For example, the physical properties of the blend of the polysaccharide starch with polyolefin are adversely affected by the incompatibility of and poor adhesion between the polar starch and the non-polar polyolefin. In order to solve this problem, the starch must be modified, or compatibilized with the polyolefin, thereby increasing the cost of the blend. When more polar thermoplastics are employed in the preparation of the blend, other physical properties such as moisture resistance can be adversely affected. It would be desirable to provide a composition having useful mechanical properties comprising a polysaccharide and another hydroxy-functional polymer which is compatible therewith.

The present invention is a composition comprising (1) a polysaccharide, a modified polysaccharide or a naturally-occurring fiber or particulate filler and (2) a thermoplastic hydroxy-functional polyether derived from monomers containing 1 or more epoxy groups.

The hydroxy-functional polyether has been found to adhere strongly to a polysaccharide. This adhesion, and the generally good physical properties of hydroxy-functional polyethers, allows for the preparation of hitherto unknown materials with useful physical properties.

The compositions of the present invention are suitable for use in fabricating molded, extruded or foamed articles, containers, films, film laminates, or coatings using conventional fabricating techniques such as extrusion, compression molding, injection molding, blow molding and similar fabrication techniques commonly used to produce such articles. Examples of such articles include films, foams, sheets, pipes, rods, bags, boxes, meat trays, egg cartons, cups and plates, cutlery, and other disposable consumer items. The compositions of the present invention are also suitable for use as adhesives and encapsulating agents.

The hydroxy-functional polyethers employed in the practice of the present invention are:
(1) hydroxy functional polyethers having repeating units represented by the formula: 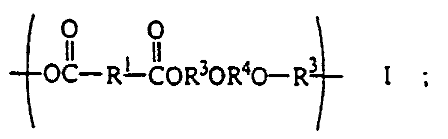 wherein R' individually represents a divalent organic moiety which is predominantly hydrocarbylene, or a combination of different organic moieties which are predominantly hydrocarbylene; R³ is 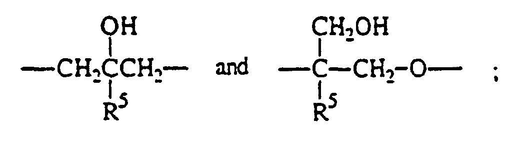 and
   R⁴ is 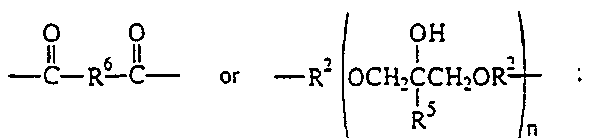
wherein R² and R⁶ are divalent organic moieties which are predominantly hydrocarbylene or R⁵ is hydrogen or alkyl, R⁶ is independently an organic moiety which is predominantly hydrocarbylene, and, n is an integer from 0 to 100.

The term "predominantly hydrocarbylene" is defined as a divalent radical that is predominantly hydrocarbon, but which optionally contains a minor amount of a heteroatomic moiety such as oxygen, sulfur, imino, sulfonyl, and sulfoxyl.

Preferably R¹, R² and R⁶ are represented by the formula: 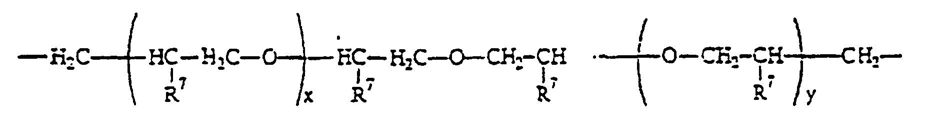 wherein R⁷ is independently hydrogen or methyl and x and y are independently from 0 to 100.

Representative divalent organic moieties useful as R¹ R² and R⁶ include alkylene, cycloalkylene, alkylenearylene, poly(alkyleneoxyalkylene), alkylenethioalkylene, alkylenesulfonylalkylene, alkylene substituted with at least one hydroxyl group, cycloalkylene substituted with at least one hydroxyl group, alkylenearylene substituted with at least one hydroxyl group, poly(alkyleneoxyalkylene) substituted with at least one hydroxyl group, alkylenethioalkylene substituted with at least one hydroxyl group, alkylenesulfonylalkylene substituted with at least one hydroxyl group; arylene, dialkylenearylene, diaryleneketone, diarylenesulfone, diarylene oxide and diarylene sulfide.

In the more preferred hydroxy-functional polyethers, R¹, R² and R⁶ are independently methylene, ethylene, propylene, butylene, pentamethylene, hexamethylene, heptamethylene, octamethylene, nonamethylene, decamethylene, dodecamethylene,1,4-cyclohexylene,1,3-cyclohexylene or 1,2-cyclohexylene optionally substituted with at least one hydroxyl group, p-phenylene, m-phenylene, or 2,6-naphthalene, diphenylene-isopropylidene, sulfonyldiphenylene, carbonyldiphenylene, oxydiphenylene, or 9,9-fluorenediphenylene and n is from 0 to 10.

The poly(hydroxy ester ethers) represented by Formula I are prepared by reacting diglycidyl esters of aliphatic or aromatic diacids such as diglycidyl terephthalate, or diglycidyl ethers of dihydric phenols or alcohols with aliphatic or aromatic diacids such as adipic or terephthalic acid as described in U.S. Patents 5,171,820 and 5,496,910; and copending U.S. Patent Application Serial Nos. 131,110, filed October 1, 1993; 278,361, filed July 21, 1994; and 280,425, filed July 26, 1994.

While the amount of hydroxy-functional polyethers used depends on a variety of factors, including the specific polymer employed and the desired end uses of the composition, in general, the hydroxy-functional polyesters can be present in an amount of from 1 to 99 weight percent, preferably from 10 to 95 weight percent and, most preferably from 20 to 90 weight percent, based on the total weight of the hydroxy-functional polyester and polysaccharide.

The naturally-occurring fibers or particulate fillers which can be employed in the practice of the present invention for preparing the composition are, for example, wood flour, wood pulp, wood fibers, cotton, flax, hemp, or ramie fibers, rice or wheat straw, chitin, chitosan, cellulose materials derived from agricultural products, nut shell flour, com cob flour, and mixtures thereof. Polysaccharides which can be employed in the practice of the present invention for preparing the composition are the different starches, celluloses, hemicelluloses, xylanes, gums, pectins and pullulans. Polysaccharides are known and are described, for example, in Encyclopedia of Polymer Science and Technology, 2nd edition, 1987. The preferred polysaccharides are starch and cellulose.

Modified polysaccharides which can be employed in the practice of the present invention for preparing the composition are the esters and ethers of polysaccharides, such as, for example, cellulose ethers and cellulose esters, or starch esters and starch ethers. Modified polysaccharides are known and are described, for example, in Encyclopedia of Polymer Science and Technology, 2^{nd} edition, 1987

The term "starch" as used herein, refers to carbohydrates of natural, vegetable origin, composed mainly of amylose and/or amylopectin, and includes unmodified starches, physically modified starches, such as thermoplastic, gelatinized or cooked starches, starches with a modified acid value (pH) where acid has been added to lower the acid value of a starch to a range of from 3 to 6, gelatinized starches, ungelatinized starches, cross-linked starches and disrupted starches (starches which are not in particulate form). The starches can be in granular, particulate or powder form. They can be extracted from various plants, such as, for example, potatoes, rice, tapioca, corn, pea, and cereals such as rye, oats, and wheat.

Celluloses are known and are described, for example, in Encyclopedia of Polymer Science and Technology, 2nd edition, 1987. Celluloses are natural carbohydrate high polymers (polysaccharides) consisting of anhydroglucose units joined by an oxygen linkage to form long molecular chains that are essentially linear. Cellulose can be hydrolyzed to form glucose. The degree of polymerization ranges from 1000 for wood pulp to 3500 for cotton fiber, giving a molecular weight of from 160,000 to 560,000. Cellulose can be extracted from vegetable tissues (wood, grass, and cotton). Celluloses can be used in the form of fibers.

The composition of the present invention may also contain various additives such as, for example, plasticizers, lubricants, pigments, foaming agents, extenders, stabilizers, chemical modifiers, and flow accelerators. Each of these additives is known and several types of each are commercially available.

In general, the compositions of the present invention can be prepared by mixing (1) a thermoplastic hydroxy-functional polyether and (2) a polysaccharide, a modified polysaccharide or a naturally-occurring fiber or particulate filler and, optionally (3) other additives in an intensive mixer, such as a Haake mixer, a Banbury mixer, single- screw extruder, twin-screw extruder, or an injection-molding machine, at a temperature and for a time sufficient to provide an intimate, well-dispersed mixture of the components. Preferably, the components are brought together and processed in an appropriate melt extruder from which the blend is extruded in the form of powder or strands. The powders or strands are then pelletized or formed into granules for injection molding and other thermal processes. Standard techniques and apparatuses well known in the art can be used for these processes.

The material can be fabricated into films using processes well known to those skilled in the art, such as by cast film extrusion, blown film extrusion, and can be incorporated in multilayer constructions such as coextruded cast or blown films, with or without intermediate adhesive layers or layers containing recycled scrap material from the fabrication process.

The material can be extruded into shapes such as profiles, tubes, rods, strips, tapes, sheets, or strands, and may be further formed by molding using well known methods such as compression or injection molding, or thermoforming or vacuum molding.

The material may be in the form of a foam or cellular structure, as a flexible, rigid, or structural foam, with open, closed, or partially opened-cellular morphologies. The foam can be conveniently formed by extrusion, or by expansion of beads into a heated mold to form a shaped article. The extruded foam may be further formed by thermoforming into shaped articles. The foam may also be directly extruded into useful shapes such as rods, slabs, planks, or boards. The articles and shapes so formed are useful, for example, for packaging, insulation, and cushioning purposes.

The foam of the present invention is generally prepared by heating the composition comprising a polysaccharide, a modified polysaccharide, a naturally occurring fiber or particulate filler, and a hydroxy-functional polyether to form a plasticized or molten polymer material, incorporating a blowing agent to form a foamable gel, and extruding the gel through a die to form the foam product. The blowing agent can be incorporated into the polymer material before melting, or may be incorporated after the polymer material is heated to a temperature at or above its melting point. The blowing agent may be incorporated or mixed into the melt polymer material by any means known in the art such as with an extruder, mixer, or blender. The blowing agent is mixed with the melt polymer material at an elevated pressure sufficient to prevent substantial expansion of the melt polymer material and to generally disperse the blowing agent homogeneously therein. Optionally, a nucleator may be blended in the polymer melt or dry blended with the polymer material prior to plasticizing or melting. The foamable gel is typically cooled to a lower temperature to optimize physical characteristics of the foam structure. The gel is then extruded through a die of desired shape to a zone of lower or reduced pressure than that in which the gel is maintained prior to extrusion through the die. The lower pressure may be superatmospheric or subatmospheric, but is preferably at an atmospheric level.

Blowing agents useful in making the present foam structures include inorganic agents, organic blowing agents, and chemical blowing agents. Suitable inorganic blowing agents include carbon dioxide, nitrogen, argon, water, air, and helium. Organic blowing agents include aliphatic hydrocarbons having 1 to 9 carbon atoms and fully and partially halogenated aliphatic hydrocarbons having 1 to 4 carbon atoms.

The present foam has the density from 5 to 200 kilograms per cubic meter. The foam has an average cell size from 0.1 to 5.0 millimeters. The foam may be open or closed-cell.

Though the preferred process for making the present foam is an extrusion process, it is understood that the above structure may be formed by the expansion of beads, which may be molded at the time of expansion to form structures of various shapes.

The composition of the present invention is also useful as hot-melt adhesives, and can be formulated with tackifying resins, plasticizers, waxes, and/or conventional additives in varying amounts as are known to those skilled in the art.

The composition may be fabricated into a container using conventional processes such as blow molding, injection molding, vacuum forming, thermoforming, injection blow molding, extrusion blow molding, and pultrusion.

The composition can be used as a coating or a laminate, and can be applied to a substrate by methods such as calendering, curtain coating, extrusion coating, roll coating, or spray coating.

The composition can be used as an encapsulant capable of slow or controlled release of a pharmacologically active agent, a catalyst, a biocide or a fertilizer, and can be prepared by compounding the material with, as an additional component, the pharmacologically active agent, the biocide, the fertilizer, or the fertilizer, either during or after the composition is prepared. In the case of active materials that might not be stable under the processing conditions employed to produce the composition, the composition of the invention can be applied to particles of the active agent by spray coating, solution coating, or other well known methods to produce the encapsulated active ingredient.

The composition may also be in the form of a substrate comprising a polysaccharide, such as wood, paper, textile, or a starch article, optionally containing a hydroxy-functional polyether derived from monomers containing one or more epoxy groups, coated with a hydroxy-functional polyether derived from monomers containing one or more epoxy groups. The hydroxy-functional polyether can be used to modify the surface or structural properties of the substrate, to protect the substrate in use. The coating can be conveniently applied using well known methods such as extrusion, calendering, pressure lamination, roll coating, powder coating, curtain coating, or solution coating. The substrate is preferably a paper, cardboard, cellulose film, modified cellulose film, starch film, a modified starch film, wood, or a film or an article comprising a polysaccharide, a modified polysaccharide, a naturally occurring fiber or particulate filler, and a hydroxy-functional polyether. The substrate is most preferably paper, cardboard, or an article comprising a polysaccharide, a modified polysaccharide, a naturally occurring fiber or particulate filler, and a hydroxy-functional polyether.

The following working examples are given to illustrate the invention and should not be construed as limiting its scope. Unless otherwise indicated, all parts and percentages are by weight.

### Example 1

A 13 L resin kettle, equipped with a mechanical stirrer and nitrogen inlet, was charged with hydroquinone diglycidyl ether (1312.5 g, 5.8 mol, 113.06 g/equivalent epoxide), 1,10-decanedicarboxylic acid (1343.5 g, 5,83 mol), and tetra-n-butylammonium bromide (94.2 g, 0.29 mol). Diglyme (3 L) was added and the mixture heated to 110°C for 5.5 hours under an atmosphere of nitrogen. Glacial acetic acid (250 mL) was added and heating at 110°C was continued overnight. The solution was allowed to cool to about 50°C and was poured into water in a large Waring blender (300 mL portions into 2 L of water). The fibrous precipitate was collected by suction filtration and suspended in fresh water for 3 days. The product was collected by suction filtration and allowed to air-dry overnight. The product is dried in a vacuum oven at 100°C to 115°C overnight. The polymer had an inherent viscosity of 0.42 dL/g (DMF, 25°C, 0.5g/dL), a T_{g} of 5°C, and a Tₘ of 75°C.

Dry blends of the above polymer and unmodified potato starch were prepared using the weight ratios indicated in the table. The blends were compounded using a Haake mixer (60 cc bowl) at 120°C for 6 minutes as indicated. Plaques (4 inch by 4 inch by 1/16 inch) were prepared by compression molding the material obtained from the Haake mixer. Specimens for mechanical property testing were obtained from these plaques. Selected tensile properties are listed in Table I.

**Table I**

| Mechanical Properties of Starch-Poly(ester ether) Blends | | | | | |
|---|---|---|---|---|---|
| Mech. Properties | Control (0% Starch) | 20% Starch | 40% Starch | 60% Starch | 80% Starch |
| Yield Stress (PSI) | 880 | 940 | 1130 | 1340 | - |
| Yield Strain (%) | 15 | 12 | 9 | 8 | - |
| Tensile Strength (psi) | 3050 | 1840 | 870 | 1080 | 2210 |
| Tensile Elongation(%) | 705 | 370 | 190 | 14 | 6 |
| Tensile Modulus (psi) | 12240 | 16640 | 29690 | 45210 | 96510 |

### Example 2

The poly(hydroxy ester ether) derived from the reaction of the diglycidyl ether of bisphenol A with adipic acid was compounded with various levels of hardwood flour (American Wood Fibers grade 20010) using a mechanical Brabender Plasticorder with roller blades in a nominal 60 cc counter-rotating mixer head at 150°C. The polymer was loaded and processed at 63 rpm for two minutes, then the wood flour was added and processed under the conditions shown in Table II.

**Table II**

| Example number | Weight % wood flour | Minutes processed | Final torque (m-g) |
|---|---|---|---|
| 3(a) | 10 | 3 | 400 |
| 3(b) | 30 | 5 | 520 |
| 3(c) | 50 | 5 | 1500 |

The compounded materials were compression-molded into test plaques using a 4 inch by 4 inch by 1/16 inch thick frame mold chase between two flat stainless steel plates using Fluoroglide™ CP as a mold release. The Examples 3(a) and 3(b) materials were molded at 150°C for 3 minutes using 1125-1250 psi on the mold cavity. The Example 2(c) material was molded at 175°C. The plaques were cooled under pressure to below 30°C before demolding. ASTM Type IV tensile test bars are machined from these plaques and tested using an Instron 4507 testing frame at a crosshead speed of 0.2 inch/minute. The results of the test are shown in Table III.

**Table III**

| Example number | Tensile strength at break (psi) | % Elongation at break | Tensile modulus (psi) |
|---|---|---|---|
| 3(a) | 3300 | 13.6 | 451,000 |
| 3(b) | 5700 | 4.5 | 648,000 |
| 3(c) | 7800 | 2.0 | 843,000 |

The data above indicate that addition of starch to a hydroxy-functional polyether in accordance with the present invention produces materials having useful mechanical properties.

## Claims

1. A composition of matter comprising (1) a polysaccharide, a modified polysaccharide, or a naturally occurring fiber or particulate filler and (2) a thermoplastic hydroxy functional polyetherester having repeating units represented by any one of the following formulas: 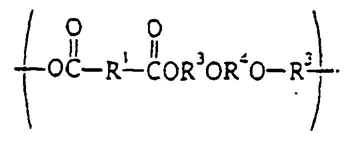 wherein R¹ is a divalent organic moiety which is hydrocarbylene which optionally contains a minor amount of heteroatomic moiety selected from the group consisting of oxygen, sulfur, imino, sulfonyl, and sulfoxyl; R³ is independently either 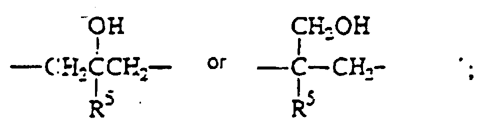 and
R⁴ is 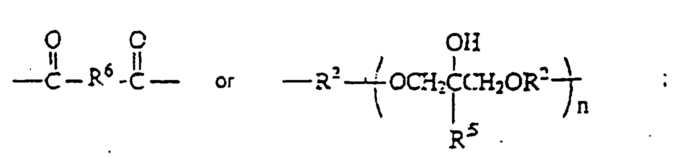 wherein R² and R⁶ are independently divalent organic moieties which are predominantly hydrocarbon, and R⁵ is hydrogen or alkyl; and n is from 0 to 100.

2. The composition of Claim 1, wherein R¹, R² and R⁶ are independently alkylene, cycloalkylene, alkylenearylene, poly(alkyleneoxyalkylene), alkylenethioalkylene, alkylenesulfonylalkylene, alkylene substituted with at least one hydroxyl group, cycloalkylene substituted with at least one hydroxyl group, alkylenearylene substituted with at least one hydroxyl group, poly(alkyleneoxyalkylene) substituted with at least one hydroxyl group, alkylenethioalkylene substituted with at least one hydroxyl group, alkylenesulfonylalkylene substituted with at least one hydroxyl group, arylene, dialkylenearylene, diaryleneketone, diarylenesulfone, diarylene oxide or diarylene sulfide.

3. The composition of Claim 1, wherein R¹, R² and R⁶ are independently methylene, ethylene, propylene, butylene, pentamethyle ne, hexamethylene, heptamethylene, octamethylene, nonamethylene, decamethylene, dodecamethylene, 1,4-cyclohexylene, 1,3-cyclohexylene or 1,2-cyclohexylene optionally substituted with at least one hydroxyl group.

4. The composition of Claim 1, wherein R¹, R² and R⁶ are represented by the formula: 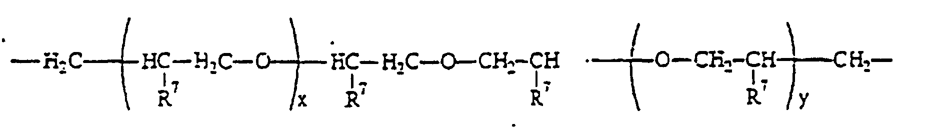 wherein R⁷ is independently hydrogen or methyl and x and y are independently from 0 to 100.

5. The composition of Claim 1, wherein R¹ and R⁶ are independently p-phenylene, m-phenylene, or 2,6-naphthalene.

6. The composition of Claim 1, wherein R² is m-phenylene, p-phenylene, naphthylene, diphenylene-isopropylidene, sulfonyldiphenylene, carbonyldiphenylene, oxydiphenylene, or 9,9- fluorenediphenylene.

7. The composition of Claim 1, wherein R⁵ is hydrogen.

8. The composition of Claim 1, wherein n is from 0 to 10.

9. The composition of Claim 1, wherein the polysaccharide is a starch or a cellulose.

10. The composition of Claim 9, wherein the starch is derived from potato, rice, corn or wheat.

11. The composition of Claim 9, wherein the starch is a granular starch, and the cellulose is in the form of a fiber.

12. The composition of Claim 9, wherein the starch is a thermoplastic starch.

13. The composition of Claim 9, wherein the cellulose is extracted from wood pulp or cotton fibers.

14. The composition of Claim 1, wherein the modified polysaccharide is an ether or an ester of the polysaccharide.

15. The composition of Claim 17, wherein the modified polysaccharide is a cellulose. ether or cellulose ester.

16. The composition of Claim 1, wherein the naturally-occurring fiber or particulate filler is wood flour, wood pulp, wood fibers, cotton, flax, hemp, or ramie fibers, rice or wheat straw, chitin, chitosan, cellulose materials derived from agricultural products, nut shell flour, com cob flour, or mixtures thereof.

17. The composition of Claim 1, wherein the thermoplastic hydroxy-functional polyether is present in an amount of from 1 to 99 weight percent, and the polysaccharide, a modified polysaccharide, or a naturally-occurring fiber or particulate filler is present in an amount of from 99 to 1 weight percent, based on the weight of the two components.

18. The composition of Claim 1, in the form of a film.

19. The composition of Claim 1, in the form of a molded or extruded article.

20. The composition of Claim 1, in the form of an open-ceil or closed cell foam.

21. The composition of Claim 1, in the form of an adhesive.

22. The composition of Claim 1, in the form of a rigid or flexible container.

23. Tne composition of Claim 1, in the form of a packaging material.

24. The composition of Claim 1, in the form of a coating.

25. The composition of Claim 1, in the form of a laminate.

26. The composition of Claim 1, in the form of an encapsulant capable of slow or controlled release of a pharmacologically active agent, a catalyst, a biocide or a fertilizer.

27. An article comprising a substrate of a polysaccharide coated with a thermoplastic hydroxy-functional polyether as defined in Claim 1.

28. The article of Claim 27, in which the polysaccharide is a paper product.

29. A laminate comprising a thermoplastic hydroxy-functional polyether as defined in Claim 1 bonded to a substrate comprising, paper, cardboard, cellulose film, modified cellulose film, starch film, modified starch film, or wood.

30. A process for preparing a blend which comprises mixing a thermoplastic hydroxy-functional polyether as defined in Claim 1 with a potysaccharide, modified polysaccharide, or naturally-occurring fiber or particulate filter in an intensive mixer at a temperature and for a time sufficient to provide a well-dispersed mixture of the components.

## Patentansprüche

1. Zusammensetzung aus Materialien, die (1) ein Polysaccharid, ein modifiziertes Polysaccharid oder natürlich vorkommende Fasern oder einen Füllstoff in Teilchenform sowie (2) einen thermoplastischen hydroxyfunktionellen Polyetherester mit Repetiereinheiten enthält, die durch eine beliebige der folgenden Formeln symbolisiert werden: 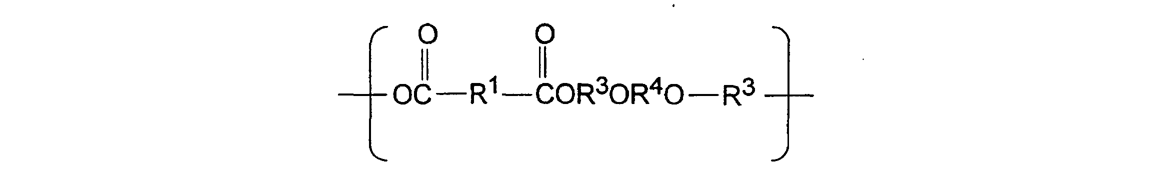 welcher je nach Wunsch einen kleineren Mengenanteil an Heteroatomen im Molekül enthält, welche aus der Gruppe ausgewählt sind, die aus Sauerstoff, Schwefel, Imino, Sulfonyl und Sulfoxyl besteht und worin R¹ einen zweiwertigen organischen Rest darstellt, der als Hydrocarbylen vorliegt, und R³ unabhängig davon entweder 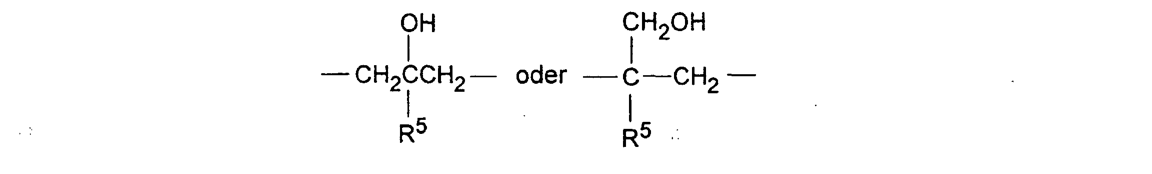 bedeutet, wobei R⁴ 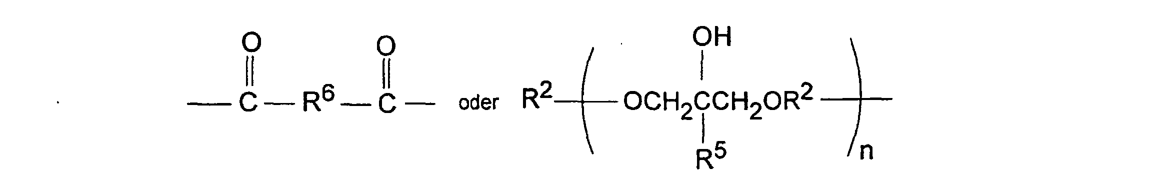 bedeutet, worin R² und R⁶ unabhängig voneinander zweiwertige organische Reste sind, die in vorwiegender Weise einen Kohlenwasserstoff darstellen, wobei R⁵ Wasserstoff oder Alkyl darstellt und n (eine Zahl) von 0 bis 100 bedeutet.

2. Zusammensetzung nach Anspruch 1, in welcher R¹, R² und R⁶ unabhängig voneinander Alkylen, Cycloalkylen, Alkylenarylen, Poly(alkylenoxyalkylen), Alkylenthioalkylen, Alkylensulfonylalkylen, Alkylen, das mit mindestens einer Hydroxylgruppe substituiert ist, Cycloalkenyl, das mit mindestens einer Hydroxylgruppe substituiert ist, Alkylenarylen, das mit mindestens einer Hydroxylgruppe substituiert ist, Poly(alkylenoxyalkylen), das mit mindestens einer Hydroxylgruppe substituiert ist, Alkylenthioalkylen, das mit mindestens einer Hydroxylgruppe substituiert ist, Alkylensulfonylalkylen, das mit mindestens einer Hydroxylgruppe substituiert ist, Arylen, Dialkylenarylen, Diarylenketon, Diarylensulfon, Diarylenoxid oder Diarylensulfid darstellen.

3. Zusammensetzung nach Anspruch 1, in welcher R¹, R² und R⁶ unabhängig voneinander Methylen, Ethylen, Propylen, Butylen, Pentamethylen, Hexamethylen, Heptamethylen, Octamethylen, Nonamethylen, Decamethylen, Dodecamethylen, 1,4 - Cyclohexylen, 1,3 - Cyclohexylen oder 1,2 - Cyclohexylen, wahlweise mit mindestens einer Hydroxylgruppe substituiert, darstellen

4. Zusammensetzung nach Anspruch 1, in welcher R¹, R² und R⁶ durch die Formel 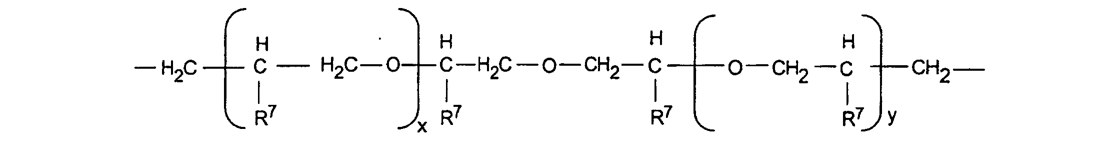 symbolisiert werden, worin R⁷ jeweils unabhängig Wasserstoff oder Methyl sowie x und y unabhängig voneinander eine Zahl von 0 bis 100 bedeuten.

5. Zusammensetzung nach Anspruch 1, in welcher R¹ und R⁶ unabhängig voneinander p - Phenylen, m - Phenylen oder 2,6 - Naphthalen bedeuten.

6. Zusammensetzung nach Anspruch 1, in welcher R² m-Phenylen, p-Phenylen, Naphthylen, Diphenylen-isopropyliden, Sulfonyldiphenylen, Carbonyldiphenylen, Oxydiphenylen oder 9,9 - Difluordiphenylen bedeutet.

7. Zusammensetzung nach Anspruch 1, in welcher R⁵ Wasserstoff darstellt.

8. Zusammensetzung nach Anspruch 1, worin n eine Zahl von 0 bis 10 bedeutet.

9. Zusammensetzung nach Anspruch 1, worin das Polysaccharid in Form von Stärke oder einer Zellulose vorliegt.

10. Zusammensetzung nach Anspruch 9, worin die Stärke von Kartoffeln, Reis, Mais oder Weizen abgeleitet ist.

11. Zusammensetzung nach Anspruch 9, worin die Stärke als granulierte Stärke und die Zellulose in Form von Fasern vorliegen.

12. Zusammensetzung nach Anspruch 9, worin die Stärke in Form einer thermoplastischen Stärke vorliegt.

13. Zusammensetzung nach Anspruch 9, worin die Zellulose aus Zellstoff oder Baumwollfasern extrahiert worden ist.

14. Zusammensetzung nach Anspruch 1, worin das modifizierte Polysaccharid einen Ether oder Ester des Polysaccharids darstellt.

15. Zusammensetzung nach Anspruch 17, worin das modifizierte Polysaccharid in Form eines Zellulose-Ethers oder Zellulose-Esters vorliegt.

16. Zusammensetzung nach Anspruch 1, worin die natürlich vorkommenden Fasern oder der Füllstoff in Form von Teilchen aus Holzmehl, Zellstoff, Holzfasern, Baumwoll-, Flachs-, Hanf- oder Chinagrasfasern, Reis- oder Weizenstroh, Chitin, Chitosan oder als Zellulosematerialien, die landwirtschaftlichen Produkten entstammen, Nussschalenmehl, Maiskolbenmehl oder Gemischen daraus vorliegen.

17. Zusammensetzung nach Anspruch 1, worin der thermoplastische hydroxyfunktionelle Polyether in einer Menge von 1 bis 99 Gew. - % vorhanden ist, wobei das Polysaccharid, ein modifiziertes Polysaccharid oder die natürlich vorkommenden Fasern oder der Füllstoff in Teilchenform in einer Menge von 99 bis 1 Gew. - % vorhanden sind, und zwar auf Basis des Gewichts der beiden Komponenten.

18. Zusammensetzung nach Anspruch 1 in Form eines Films.

19. Zusammensetzung nach Anspruch 1 in Form eines geschmolzenen oder extrudierten Erzeugnisses.

20. Zusammensetzung nach Anspruch 1 in Form eines offenzelligen oder geschlossenzelligen Schaumes.

21. Zusammensetzung nach Anspruch 1 in Form eines Klebstoffes.

22. Zusammensetzung nach Anspruch 1 in Form eines starren oder elastischen Behälters.

23. Zusammensetzung nach Anspruch 1 in Form eines Verpackungsmaterials.

24. Zusammensetzung nach Anspruch 1 in Form einer Beschichtung.

25. Zusammensetzung nach Anspruch 1 in Form eines Laminats.

26. Zusammensetzung nach Anspruch 1 in Form einer Verkapselung, die zur verlangsamten oder kontrollierten Freisetzung eines pharmakologischen Wirkstoffes, eines Katalysators, eines Biozides oder eines Düngemittels befähigt ist.

27. Erzeugnis, das ein Substrat eines Polysaccharids aufweist, welches mit einem thermoplastischen hydroxyfunktionellen Polyether gemäß der im Anspruch 1 angegebenen Definitionen beschichtet ist.

28. Erzeugnis nach Anspruch 27, bei welchem das Polysaccharid ein Produkt aus Papier darstellt.

29. Laminat, das einen thermoplastischen hydroxyfunktionellen Polyether gemäß der im Anspruch 1 angegebenen Definitionen aufweist, der an ein Substrat gebunden ist, das Papier, Karton, einen Zellulosefilm, einen Film aus modifizierter Zellulose, Stärkefilm, einen Film aus modifizierter Stärke, oder Holz aufweist.

30. Verfahren zur Herstellung eines Gemisches, welches das Vermischen eines thermoplastischen hydroxyfunktionellen Polyethers gemäß der im Anspruch 1 angegebenen Definitionen mit einem Polysaccharid, einem modifizierten Polysaccharid, natürlich vorkommenden Fasern oder einem Füllstoff in Teilchenform in einem Intensivmischer bei einer Temperatur und für eine Zeitdauer umfasst, die ausreichend sind, eine gut dipergierte Mischung aus diesen Komponenten entstehen zu lassen.

## Revendications

1. Composition de matière comprenant (1) un polysaccharide, un polysaccharide modifié ou bien un produit de remplissage en fibres naturelles ou en matière particulaire et (2) un ester polyéther thermoplastique à fonction hydroxy possédant des unités répétées représentées par la formule suivante: 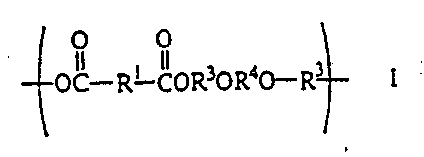 contenant en option une quantité mineure de groupement hétéroatomique sélectionné parmi le groupe consistant en oxygène, soufre, imino, sulfonyle et sulfoxyle, dans laquelle R¹ est un groupement organique divalent, qui est un hydrocarbylène ; R³ est indépendamment soit 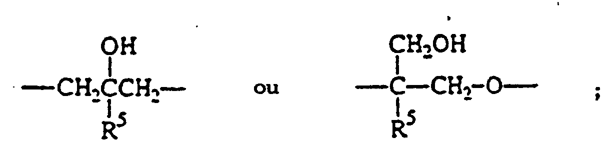 et
R⁴ est 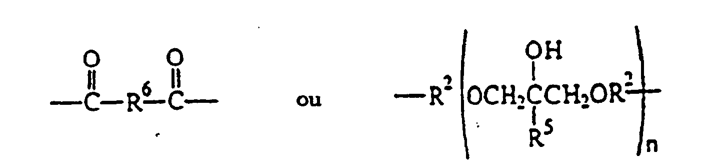 dans laquelle R² et R⁶ sont indépendamment l'un de l'autre des groupements organiques divalents, qui sont principalement un hydrocarbure, et R⁵ est de l'hydrogène ou un alkyle ; et n est compris entre 0 et 100.

2. Composition selon la revendication 1, dans laquelle R¹, R² et R⁶ sont indépendamment les unes des autres un alkylène, un cycloalkylène, un arylène alkylène, un poly (oxyalkylène alkylène), un thioalkylène alkylène, un sulfonylalkylène alkylène, un alkylène substitué par au moins un groupe hydroxyle, un cycloalkylène substitué par au moins un groupe hydroxyle, un arylène alkylène substitué par au moins un groupe hydroxyle, un poly (oxyalkylène alkylène) substitué par au moins un groupe hydroxyle, un thioalkylène alkylène substitué par au moins un groupe hydroxyle, un sulfonylalkylène alkylène substitué par au moins un groupe hydroxyle, un arylène, un arylène dialkylène, une cétone diarylène, un sulfone diaryle, un oxyde de diarylène ou un sulfure de diarylène.

3. Composition selon la revendication 1, dans laquelle R¹, R² et R⁶ sont indépendamment les unes des autres un méthylène, un éthylène, un propylène, un butylène, un pentaméthylène, un hexaméthylène, un heptaméthylène, un octaméthylène, un nonaméthylène, un décaméthylène, un dodécaméthylène, un 1,4-cyclohexylène, un 1,3-cyclohexylène ou un 1,2-cyclohexylène, éventuellement substitué par au moins un groupe hydroxyle.

4. Composition selon la revendication 1, dans laquelle R¹, R² et R⁶ sont représentés par la formule : 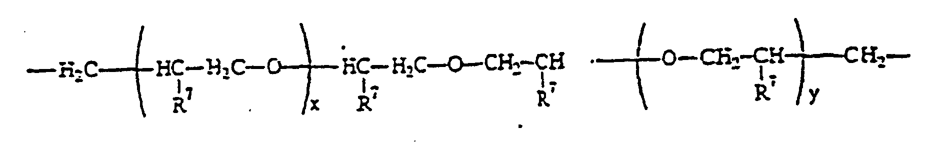 dans laquelle R⁷ est indépendamment de l'hydrogène ou du méthyle et x et y sont indépendamment compris entre 0 et 100.

5. Composition selon la revendication 1, dans laquelle R¹ et R⁶ sont indépendamment l'un de l'autre un p-phénylène, un m-phénylène ou un 2,6-naphtalène.

6. Composition selon la revendication 1, dans laquelle R² est un m-phénylène, un p-phénylène, un naphtylène, un diphénylène-isopropylidène, un diphénylène sulfonyl, un diphénylène carbonyle, un oxydiphénylène ou un 9,9-diphénylène fluorène.

7. Composition selon la revendication 1, dans laquelle R⁵ est de l'hydrogène.

8. Composition selon la revendication 1, dans laquelle n est compris entre 0 et 10.

9. Composition selon la revendication 1, dans laquelle le polysaccharide est un amidon ou une cellulose.

10. Composition selon la revendication 9, dans laquelle l'amidon est dérivé de pomme de terre, de riz, de maïs ou de blé.

11. Composition selon la revendication 9, dans laquelle l'amidon est un amidon granulaire et la cellulose est sous forme de fibre.

12. Composition selon la revendication 9, dans laquelle l'amidon est un amidon thermoplastique.

13. Composition selon la revendication 9, dans laquelle la cellulose est extraite de pâte de bois ou de fibres de coton.

14. Composition selon la revendication 1, dans laquelle le polysaccharide modifié est un éther ou un ester du polysaccharide.

15. Composition selon la revendication 14, dans laquelle le polysaccharide modifié est un éther de cellulose ou un ester de cellulose.

16. Composition selon la revendication 1, dans laquelle le produit de remplissage en fibre naturelle ou en matière particulaire est de la farine de bois, de la pulpe de bois, des fibres de bois, du coton, du lin, du chanvre, ou des fibres de ramie, de la paille de riz ou de blé, de la chitine, du chitosane, des matériaux de cellulose dérivés de produits agricoles, de la farine d'écorce de noix, de la farine d'épis de maïs ou des mélanges de ceux-ci.

17. Composition de la revendication 1, dans laquelle le polyéther thermoplastique à fonction hydroxy est présent dans une quantité comprise entre 1 et 99 pour-cent en poids, et le polysaccharide, un polysaccharide modifié ou un produit de remplissage en fibres naturelles ou en matière particulaire est présent dans une quantité comprise entre 99 et 1 pour-cent en poids, sur la base du poids des deux composants.

18. Composition selon la revendication 1, sous forme de film.

19. Composition selon la revendication 1, sous forme d'article moulé ou extrudé.

20. Composition selon la revendication 1, sous forme de mousse à alvéoles ouverts ou à alvéoles fermés.

21. Composition selon la revendication 1, sous forme d'adhésif.

22. Composition selon la revendication 1, sous forme de conteneur rigide ou souple.

23. Composition selon la revendication 1, sous forme de matériau d'emballage.

24. Composition selon la revendication 1, sous forme de revêtement.

25. Composition selon la revendication 1, sous forme de produit laminé.

26. Composition selon la revendication 1, sous forme d'encapsulant capable de ralentir ou de doser la libération d'un agent actif pharmacologiquement, d'un catalyseur, un biocide ou d'un engrais.

27. Article comprenant un substrat de polysaccharide revêtu d'un polyéther thermoplastique à fonction hydroxy selon la revendication 1.

28. Article selon la revendication 27, dans lequel le polysaccharide est produit papier.

29. Produit laminé comprenant un polyéther thermoplastique à fonction hydroxy selon la revendication 1, lié à un substrat comprenant du papier, du carton, un film de cellulose, un film de cellulose modifiée, un film d'amidon, un film d'amidon modifié ou du bois.

30. Procédé de préparation d'un mélange qui comprend le mélange d'un polyéther thermoplastique à fonction hydroxy selon la revendication 1, avec un polysaccharide, un polysaccharide modifié, ou bien un produit de remplissage en fibres naturelles ou en matière particulaire, dans un mélangeur intensif à une température et pendant une durée suffisantes pour assurer un mélange bien dispersé des composants.
